# EUROPÄISCHE PATENTSCHRIFT

(11) **EP 3 386 740 B1**
(45) Veröffentlichungstag und Bekanntmachung des Hinweises auf die Patenterteilung: **18.08.2021**
(21) Anmeldenummer: 16781714.7
(22) Anmeldetag: 06.10.2016
(51) Int. Cl.: B29D 22/02, B29C 33/48, B30B 11/00

(54) **VORRICHTUNG ZUR HERSTELLUNG VON KONUSBÄLGEN**
DEVICE FOR PRODUCING CONICAL BELLOWS
DISPOSITIF DE FABRICATION DE SOUFFLETS CONIQUES

(30) Priorität: 11.12.2015 DE 102015224964
(43) Veröffentlichungstag der Anmeldung: 17.10.2018
(73) Patentinhaber: ContiTech Luftfedersysteme GmbH, 30165 Hannover (DE)
(72) Erfinder: REISCH, Winfried, 31515 Wunstorf (DE); LOMMATZSCH, Rüdiger, 30916 Isernhagen (DE)
(74) Vertreter: Continental Corporation
(86) Internationale Anmeldenummer: PCT/EP2016/073857
(87) Internationale Veröffentlichungsnummer: WO 2017/097456

(56) Entgegenhaltungen:
- WO-A1-2008/007400
- DE-A1- 10 103 257
- DE-C- 686 416
- US-A- 2 682 924
- US-A- 2 901 771
- US-A- 4 754 543

## Beschreibung

### Vorrichtung zur Herstellung von Konusbälgen

Die Erfindung betrifft eine Vorrichtung, geeignet zur Herstellung von Konusbälgen für Luftfedern, aufweisend mindestens eine Klemm-Spreiz-Vorrichtung und eine Vulkanisationsform, wobei von der Klemm-Spreiz-Vorrichtung zwei Endstellungen anfahrbar sind, nämlich eine Einführstellung und eine Vulkanisationsstellung, wobei der Außendurchmesser der Einführstellung kleiner ist, als der Außendurchmesser der Vulkanisationsstellung.

Üblicherweise werden Luftfederbälge, die sich über Konussitze auf angrenzende Bauteile abstützen und abdichten lassen, bei der Vulkanisation in entsprechenden Formen innenseitig durch sogenannte Heizbälge gestützt. Die DE 195 32217 C1 zeigt einen derartigen Heizbalg.

Bei der Vulkanisation mit Heizbalg wird Druck und Temperatur mittels Heißdampf durch den Heizbalg auf den Rohling übertragen. Es ist leicht einzusehen, dass bei der Vulkanisation mit Heizbalg die für die Vernetzung des Kautschuk erforderliche Wärme länger braucht, um an den Rohling zu gelangen. Aus diesem Grunde ist die Vulkanisationszeit der heizbalglosen Vulkanisation kürzer als die der Vulkanisation mit Heizbalg.

Es ist daher wünschenswert, auch Bälge mit konusförmgen Dichtsitzen ohne Heizbalg vulkanisiert zu können.

In der DE 101 03 257 A1 ist eine entsprechende Vorrichtung offenbart, die die notwendigen Dichtungen des Balgrohlings in der Form innenseitig mit einer Klemm- und Spreiz-Vorrichtung realisiert. Bei dieser Vorrichtung verringern zwei gegenläufig angeordnete Riegel- und Segmentsysteme im entspannten Zustand den Außendurchmesser der Vorrichtung und ermöglichen damit ein Überstülpen des Rohlings. Durch Spreizen der Riegel und Segmente werden nacheinander die Wülste von innen formschlüssig gespannt und damit für die schlauchlose Vulkanisation abgedichtet.

Diese Vorrichtung ist jedoch relativ aufwendig und anfällig, da bei der Vulkanisation das Rohgummi in die noch vorhandenen Spalten der Klemm- und Spreizvorrichtung eindringen kann.

Der Erfindung liegt die Aufgabe zugrunde, eine Vorrichtung der eingangs geschilderten Art derart zu verändern, dass eine Vulkanisation von Luftfederrohlingen mit Konussitz ohne Heizbalg deutlich vereinfacht wird.

Diese Aufgabe wird dadurch gelöst, dass die Klemm-Spreiz-Vorrichtung Klemmsegmente aufweist, die in der Einführstellung derart zusammengefahren sind, dass der Außendurchmesser der Klemm-Spreiz-Vorrichtung ein Überstülpen eines Luftfederbalg-Rohlings ermöglicht und die Klemmsegmente in der Vulkanisationsstellung derart auseinander gefahren sind, dass der Außendurchmesser der Klemm-Spreiz-Vorrichtung derart vergrößert ist, dass der Luftfederbalg-Rohling von innen dicht gegen die korrespondierende Außenform der Vulkanisationsform pressbar ist, wobei durch die Vergrößerung des Außendurchmessers der Klemm-Spreiz-Vorrichtung zwischen den Segmenten offene Spalten verbleiben, wobei der bei der Vulkanisation erweichte Gummi des Balgrohlings zwischen den Klemmsegmenten der Klemm-Spreiz-Vorrichtung ins Innere des Balges ragende Ausstülpungen ausbildet.

Da der Balgrohling jedoch mindestens einen im Gummi eingebetteten Festigkeitsträger, meist ein textiles Gewebe aufweist, ist dadurch das Gummi genügend gestützt, dass in den Ausstülpungen des Balges in den Spalten das Gewebe nicht durchdrückbar ist. Damit ist auch bei Ausbildung der Ausstülpungen im Innern des Balges eine einwandfreie Vulkanisation des Balges gewährleistet.

In einer Weiterbildung der Erfindung liegt die Breite der offenen Spalten zwischen den Klemmsegmenten der Klemm-Spreiz-Vorrichtung in Vulkanisationsstellung zwischen 1 und 30 mm.

In einer Weiterbildung der Erfindung liegt die Breite der offenen Spalten zwischen den Klemmsegmenten der Klemm-Spreiz-Vorrichtung in Vulkanisationsstellung zwischen 3 und 25 mm.

In Versuchen haben sich diese Geometrien in Abhängigkeit von Klemmsegment-Anzahl und Durchmesserverhältnissen als optimal gezeigt, sodass die Fäden des Festigkeitsträgers so liegen, dass sie nicht durch das Gummi hindurchdrückbar sind. Damit ist während der Vulkanisation eine zuverlässige Abdichtung und die Dichtheit des Balges im ausvulkanisiert Zustand gegeben.

In einer Weiterbildung der Erfindung weist die Klemm-Spreiz-Vorrichtung mindestens drei Klemmsegmente auf.

Ab einer Klemmsegmentzahl von drei zeigt sich eine besonders unkritische Ausbildung der genannten Ausstülpungen.

Anhand der Zeichnung wird nachstehend ein Beispiel der Erfindung näher erläutert. Es zeigt
Figur 1 ein an sich bekanntes Werkzeug zur Vulkanisation von Luftfederbälgen mit eingelegtem Balgrohling in einem Längsschnitt
Figur 2 das Werkzeug zur Vulkanisation von Luftfederbälgen mit aus vulkanisiertem Luftfederbalg in einem Längsschnitt
Figur 3 eine Draufsicht auf eine erfindungsgemäße Klemm-Spreiz-Vorrichtung in zusammengefahrenem Zustand und
Figur 4 die Klemm-Spreiz-Vorrichtung in auseinandergefahrenem Zustand

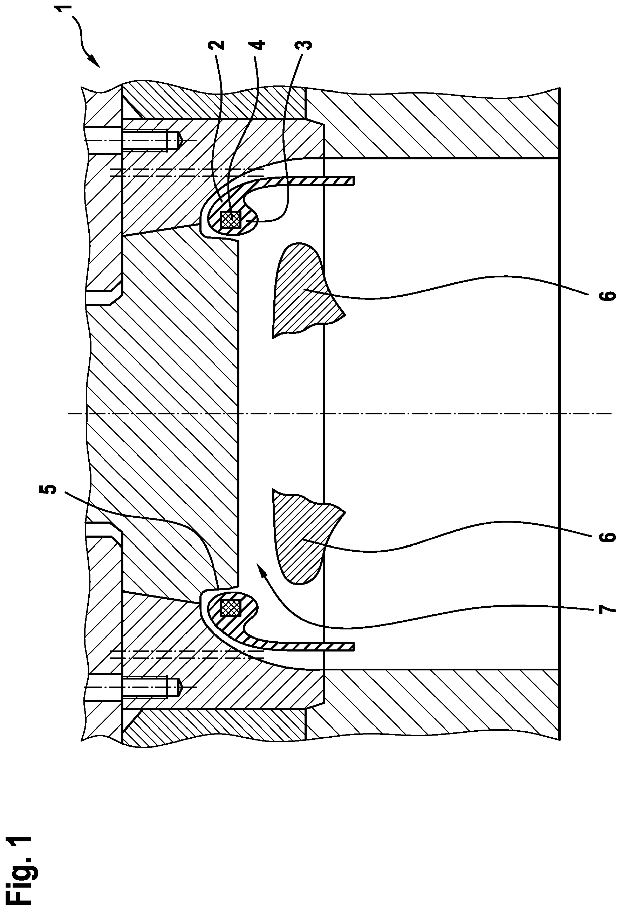

In der Figur 1 ist ein an sich bekanntes Werkzeug 1 zur Vulkanisation von Luftfederbälgen schematisch gezeigt. Ein Luftfederrohling 2, hier als oberer Abschnitt gezeigt, weist einen Wulst 3 mit einem eingebetteten Kern 4 auf. Der Wulst 3 ist gegen eine Konusform 5 geführt.

Schematisch gezeigte Klemmsegmente 6, von denen hier nur 2 Abschnitte gezeigt sind, einer nicht weiter dargestellten Klemm-Spreiz-Vorrichtung sind derart zusammengefahren, dass der Balgrohling 2 mit seiner Öffnung 7 über die Klemmsegmente 6 stülpbar war.

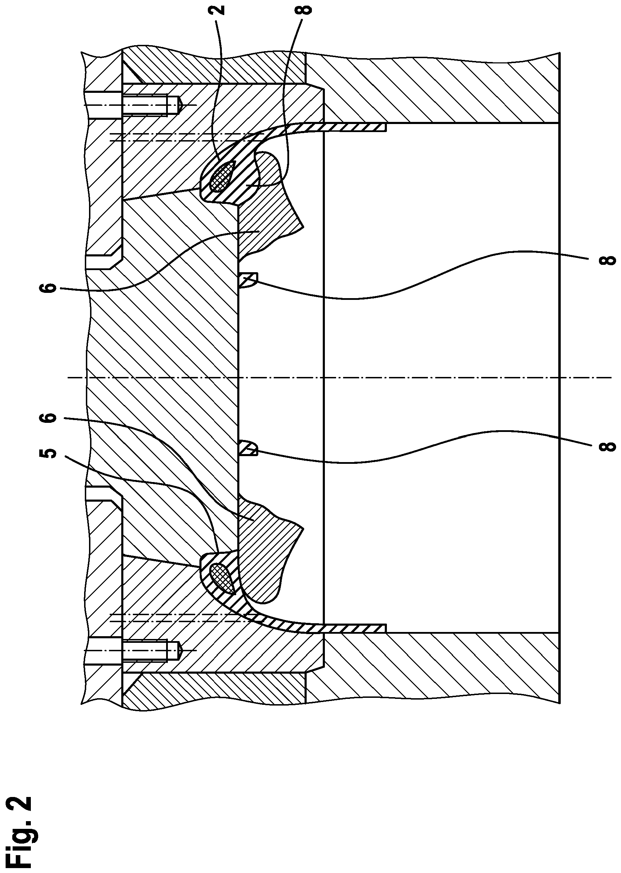

In der Figur 2 ist der Luftfederbalg 2 als ausvulkanisierter der Abschnitt gezeigt. Der Wulst 3 ist durch die hier auseinandergefahrenen Klemmsegmente 6 der Klemm-Spreiz-Vorrichtung gegen die Konusform 5 des Werkzeugs 1 gepresst. Die Klemmsegmente 6 sind dazu auseinandergefahren, sodass eine Pressung des Wulstes 3 möglich ist.

Das Auseinanderfahren der Klemmsegmente 6 führt zu Spalten zwischen den einzelnen Klemmsegmenten 6, in die bei der Vulkanisation Gummiwerkstoff des Balges 2 eingedrungen ist. Die Spalten sind in dieser Darstellung nicht sichtbar. Das in die Spalte eingedrungene Gummi bildet Ausstülpungen 8, die in das Innere des Balges 2 gerichtet sind.

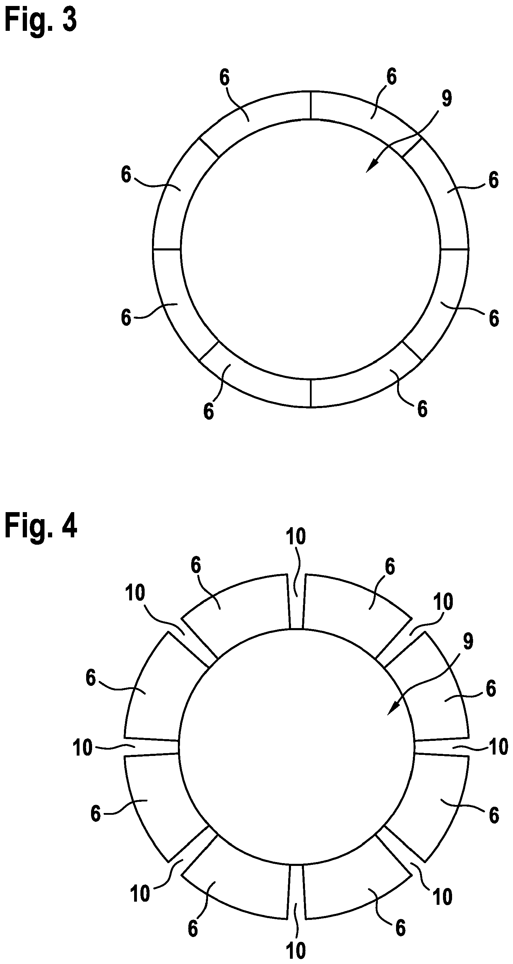

In der Figur 3 ist eine Draufsicht auf eine erfindungsgemäße Klemm-Spreiz-Vorrichtung 9 gezeigt. Die Klemm-Spreiz-Vorrichtung 9 weist acht Klemmsegmente 6 auf, die hier in zusammengefahrenem Zustand gezeigt sind.

In der Figur 4 ist die Klemm Spreiz Richtung 9 ebenfalls in einer Draufsicht gezeigt. Die Klemmsegmente 6 sind hier auseinandergefahren dargestellt. Zwischen den Klemmsegmenten 6 weist die Klemm Spreiz Richtung 9 Spalte 10 auf, die durch das Auseinanderfahren der Klemmsegmente 6 entstanden sind. Wie in Figur 2 dargestellt, führen die Spalte 10 zu den Ausstülpungen 8 des Gummiwerkstoffes. Die Ausstülpungen 8 sind in der Figur 4 nicht sichtbar.

Die erfindungsgemäße Vorrichtung ermöglicht auf einfache Weise die Vulkanisation von Luftfederbälgen ohne Heizbalg, wobei die Klemm-Spreiz-Vorrichtung sehr einfach aufgebaut ist.

### Bezugszeichenliste

### (Teil der Beschreibung)

- 1: Luftfederbalg-Vulkanisationswerkzeug
- 2: Luftfederbalg
- 3: Wulst des Luftfederbalgs 2
- 4: Kern des Wulstes 3
- 5: Konusform des Werkzeugs 1
- 6: Klemmsegmente
- 7: Öffnung des Luftfederbalgs 2
- 8: Ausstülpungen
- 9: Klemm-Spreiz-Vorrichtung
- 10: Spalte zwischen den Klemmsegmenten 6

## Patentansprüche

1. Vorrichtung, geeignet zur Herstellung von Konusbälgen (2) für Luftfedern, aufweisend mindestens eine Klemm-Spreiz-Vorrichtung (9) und eine Vulkanisationsform (1), wobei von der Klemm-Spreiz-Vorrichtung (9) zwei Endstellungen anfahrbar sind, nämlich eine Einführstellung und eine Vulkanisationsstellung, wobei der Außendurchmesser der Einführstellung kleiner ist, als der Außendurchmesser der Vulkanisationsstellung, wobei die Klemm-Spreiz-Vorrichtung (9) Klemmsegmente (6) aufweist, die in der Einführstellung derart zusammengefahren sind, dass der Außendurchmesser der Klemm-Spreiz-Vorrichtung (9) ein Überstülpen eines Luftfederbalg-Rohlings (2) ermöglicht, **dadurch gekennzeichnet, dass** die Klemmsegmente (6) in der Vulkanisationsstellung derart auseinander gefahren sind, dass der Außendurchmesser der Klemm-Spreiz-Vorrichtung (9) derart vergrößert ist, dass der Luftfederbalg-Rohling (2) von innen dicht gegen die korrespondierende Außenform (5) der Vulkanisationsform (1) pressbar ist, wobei durch die Vergrößerung des Außendurchmessers der Klemm-Spreiz-Vorrichtung (9) zwischen den Klemmsegmenten (6) offene Spalten (10) verbleiben, wobei der bei der Vulkanisation erweichte Gummi des Luftfederbalg-Rohlings (2) zwischen den Klemmsegmenten (6) der Klemm-Spreiz-Vorrichtung (9) ins Innere des Luftfederbalg-Rohlings (2) ragende Ausstülpungen (8) ausbildet.

2. Vorrichtung nach Anspruch 1, **dadurch gekennzeichnet, dass** die Breite der offenen Spalte (10) zwischen den Klemmsegmenten (6) der Klemm-Spreiz-Vorrichtung (9) in Vulkanisationsstellung zwischen 1 und 30 mm liegt.

3. Vorrichtung nach Anspruch 1, **dadurch gekennzeichnet, dass** die Breite der offenen Spalte (10) zwischen den Klemmsegmenten (6) der Klemm-Spreiz-Vorrichtung (9) in Vulkanisationsstellung zwischen 3 und 25 mm liegt.

4. Vorrichtung nach Anspruch 1, 2 oder 3, **dadurch gekennzeichnet, dass** die Klemm-Spreiz-Vorrichtung (9) mindestens drei Klemmsegmente (6) aufweist.

## Claims

1. Device suitable for producing conical bellows (2) for air springs, having at least one clamping-spreading device (9) and at least one vulcanizing mould (1), wherein two end positions, specifically an insertion position and a vulcanization position, are attainable by the clamping-spreading device (9), wherein the external diameter of the insertion position is smaller than the external diameter of the vulcanization position, wherein the clamping-spreading device (9) has clamping segments (6) which in the insertion position are converged in such a manner that the external diameter of the clamping-spreading device (9) enables an air spring bellows preform (2) to be pulled over, **characterized in that** the clamping segments (6) in the vulcanization position are diverged in such a manner that the external diameter of the clamping-spreading device (9) is enlarged in such a manner that the air spring bellows preform (2) is capable of being pressed tightly against the corresponding external shape (5) of the vulcanization mould (1) from the inside, wherein open gaps (10) on account of the enlargement of the external diameter of the clamping-spreading device (9) remain between the clamping segments (6), wherein the rubber of the air spring bellows preform (2), softened during vulcanizing, configures protuberances (8) between the clamping segments (6) of the clamping-spreading device (9) that protrude into the interior of the air spring bellows preform (2).

2. Device according Claim 1, **characterized in that** the width of the open gaps (10) between the clamping segments (6) of the clamping-spreading device (9) in the vulcanization position is between 1 and 30 mm.

3. Device according to Claim 1, **characterized in that** the width of the open gaps (10) between the clamping segments (6) of the clamping-spreading device (9) in the vulcanization position is between 3 and 25 mm.

4. Device according to Claim 1, 2, or 3, **characterized in that** the clamping-spreading device (9) has at least three clamping segments (6).

## Revendications

1. Dispositif, adapté pour la fabrication de soufflets coniques (2) pour des amortisseurs pneumatiques, possédant au moins un dispositif de serrage-écartement (9) et au moins un moule de vulcanisation (1), le dispositif de serrage-écartement (9) pouvant atteindre deux positions finales, à savoir une position d'insertion et une position de vulcanisation, le diamètre extérieur de la position d'insertion étant inférieur au diamètre extérieur de la position de vulcanisation, le dispositif de serrage-écartement (9) possédant des segments de serrage (6) qui, dans la position d'insertion, sont rassemblés de telle sorte que le diamètre extérieur du dispositif de serrage-écartement (9) rend possible un enfilage d'une ébauche de soufflet d'amortisseur pneumatique (2), **caractérisé en ce que** dans la position de vulcanisation, les segments de serrage (6) sont éloignés les uns des autres de sorte que le diamètre extérieur du dispositif de serrage-écartement (9) soit agrandi de telle sorte que l'ébauche de soufflet d'amortisseur pneumatique (2) peut être pressée étroitement par l'intérieur contre la forme extérieure (5) correspondante du moule de vulcanisation (1), des fentes ouvertes (10) restant entre les segments de serrage (6) du fait de l'agrandissement du diamètre extérieur du dispositif de serrage-écartement (9), le caoutchouc de l'ébauche de soufflet d'amortisseur pneumatique (2), ramolli lors de la vulcanisation, formant entre les segments de serrage (6) du dispositif de serrage-écartement (9) des protubérances (8) qui font saillie à l'intérieur de l'ébauche de soufflet d'amortisseur pneumatique (2).

2. Dispositif selon la revendication 1, **caractérisé en ce que** la largeur des fentes ouvertes (10) entre les segments de serrage (6) du dispositif de serrage-écartement (9) en position de vulcanisation est comprise entre 1 et 30 mm.

3. Dispositif selon la revendication 1, **caractérisé en ce que** la largeur des fentes ouvertes (10) entre les segments de serrage (6) du dispositif de serrage-écartement (9) en position de vulcanisation est comprise entre 3 et 25 mm.

4. Dispositif selon la revendication 1, 2 ou 3, **caractérisé en ce que** le dispositif de serrage-écartement (9) possède au moins trois segments de serrage (6).
